# EUROPÄISCHE PATENTANMELDUNG

(11) **EP 4 787 347 A1**
(43) Veröffentlichungstag der Anmeldung: **05.08.2026**
(21) Anmeldenummer: 26156309.2
(22) Anmeldetag: 04.02.2026
(51) Int. Cl.: G07F 17/12, G07F 9/00, G06Q 10/0836

(54) **STEUERGERÄT FÜR EINEN PAKETAUTOMATEN, SYSTEM UND VERFAHREN ZUM BETREIBEN EINES PAKETAUTOMATEN**

(30) Priorität: 04.02.2025 DE 102025104091
(71) Anmelder: Pakiaka Holding GmbH, 72202 Nagold (DE)
(72) Erfinder: Luippold, Steffen, 72202 Nagold (DE)
(74) Vertreter: Patentanwälte Bauer Vorberg Kayser

(57) **Zusammenfassung**

Es werden ein Steuergerät (26) für einen Paketautomaten (14), ein System (10) und ein Verfahren zum Betreiben eines Paketautomaten (14) bereitgestellt. Der Paketautomat (14) weist eine Stationssteuerung (22) und zumindest ein Schließfach (18) zur Aufbewahrung einer zuzustellenden Sendung (52) auf. Die Stationssteuerung (22) ist in den Paketautomaten (14) integriert. Die Stationssteuerung (22) weist eine Stations-Steueranwendung (54) für eine Interaktion zwischen der Stationssteuerung (22) und einem Nutzer (46) und/oder einem Zustelldienst (50) auf, sodass ein Zugriff auf zumindest ein Schließfach (18) durch den Nutzer (46) und/oder den Zustelldienst (50) basierend auf der Stations-Steueranwendung (54) ermöglicht wird. Das Steuergerät (26) weist zumindest eine Datenverarbeitungsvorrichtung (28), eine Kommunikationsvorrichtung (30) und eine Schlosssteuerung (32) auf. Das Steuergerät (26) ist derart mit der Stationssteuerung (22) koppelbar, dass eine Zusatzsteueranwendung (62) für eine Interaktion zwischen dem Paketautomat (14) und einem Nutzer (46) und/oder einem Zustelldienst (50) bereitgestellt wird. Die Zusatzsteueranwendung (62) weicht von der Stations-Steueranwendung (54) ab.

## Beschreibung

Die Erfindung betrifft ein Steuergerät für einen Paketautomaten, ein System und ein Verfahren zum Betreiben eines Paketautomaten.

Paketautomaten werden heutzutage vielfach für die Zustellung und/oder den Empfang von Sendungen, beispielsweise Päckchen oder Paketen genutzt. Dabei sind verschiedene Automatenbetreiber am Markt aktiv, die jeweils eigene Netzwerke von Paketautomaten betreiben. Die einzelnen Paketautomaten weisen dabei unterschiedliche Hardware-Komponenten und unterschiedliche Software-Topologien auf. Dadurch ist eine Kompatibilität mit zusätzlichen Anwendungen oder externen Komponenten, wenn überhaupt, nur je Netzwerk möglich. Zudem wird dadurch ein hoher Integrationsaufwand verursacht, sofern die Funktionalität bestehender Paketautomaten erweitert werden soll, beispielsweise da neue (Software-Funktionalitäten) für die Paketautomaten jedes Automatenbetreibers unabhängig angepasst werden müssen. Zusätzlich ist das Gesamtsystem an Paketautomaten dadurch auch nicht nutzerfreundlich, da die Nutzer für die Interaktion mit Paketautomaten unterschiedlicher Automatenbetreiber unterschiedliche Kommunikationskanäle nutzen müssen, insbesondere Anwendungen. Außerdem ist die Auslastung der Paketautomaten begrenzt, da die Automatenbetreiber bislang gleichzeitig mit der Zustellung der Sendung beauftragte Zustelldienste sind, sodass für die Paketautomaten eines bestimmten Automatenbetreibers auch nur die von diesem Automatenbetreiber zugestellten Sendungen genutzt werden können. Durch die reduzierte Auslastung und die begrenzte Funktionalität der Paketautomaten ist auch die Betriebseffizienz der Paketautomaten begrenzt.

Die zu lösende Aufgabe kann daher darin gesehen werden, die Funktionalität, die Betriebseffizienz und die Kompatibilität eines Paketautomaten erhöhen zu können.

Die Aufgabe wird erfindungsgemäß gelöst durch ein Steuergerät für einen Paketautomaten. Der Paketautomat weist eine Stationssteuerung und zumindest ein Schließfach zur Aufbewahrung einer zuzustellenden Sendung auf. Die Stationssteuerung ist in den Paketautomaten integriert. Die Stationssteuerung weist eine Stations-Steueranwendung für eine Interaktion zwischen der Stationssteuerung und einem Nutzer und/oder einem Zustelldienst auf, sodass ein Zugriff auf zumindest ein Schließfach durch den Nutzer und/oder den Zustelldienst basierend auf der Stations-Steueranwendung ermöglicht wird. Das Steuergerät weist zumindest eine Datenverarbeitungsvorrichtung, eine Kommunikationsvorrichtung und eine Schlosssteuerung auf. Das Steuergerät ist derart mit der Stationssteuerung koppelbar, dass eine Zusatzsteueranwendung für eine Interaktion zwischen dem Paketautomat und einem Nutzer und/oder einem Zustelldienst bereitgestellt wird. Die Zusatzsteueranwendung weicht von der Stations-Steueranwendung ab.

Die Erfindung basiert auf der Erkenntnis, dass die Funktionalität des Paketautomaten basierend auf einem kompakten Steuergerät stark erweitert werden kann, ohne dass dazu eine Anpassung der Komponenten des Paketautomaten zwingend erforderlich ist. Durch das Steuergerät wird aber die Funktionalität des Paketautomaten erweitert, wodurch die Betriebseffizienz des Paketautomaten erhöht werden kann, beispielsweise anhand von gebührenbasierten Zusatzfunktionalitäten. Zusätzlich kann durch das Steuergerät eine Kommunikation mit einer Vielzahl von zusätzlichen externen Komponenten oder Software-Anwendungen ermöglicht werden, wodurch die Kompatibilität des Paketautomaten erhöht ist. Die Vorteile durch das Steuergerät werden dabei unabhängig von einem Automatenbetreiber des Paketautomaten verwirklicht, sodass ein Paketautomat, der durch einen spezifischen Automatenbetreiber betrieben wird, für andere Marktteilnehmer nutzbar ist. So können Synergieeffekte beim Betrieb von Paketautomaten erzielt werden, wodurch die Betriebseffizienz der Paketautomaten weiter gesteigert wird.

Bevorzugt weist das Steuergerät eine zusätzliche, von der Stationssteuerung verschiedene Integrationsschicht für zumindest eine Zusatzsteueranwendung auf. Die Integrationsschicht kann eine Interaktion einer externen Hardware- und/oder Software-Komponente mit dem Paketautomaten gewährleistet wird. Durch die Integrationsschicht wird insbesondere die Kompatibilität erhöht.

Optional ist die Integrationsschicht derart ausgebildet, dass eine Interaktion zwischen dem Paketautomat und einem Nutzer und/oder einem Zustelldienst basierend auf der Zusatzsteueranwendung programmiersprachenunabhängig ermöglicht wird. So wird die Kompatibilität erhöht. Zudem wird der Integrationsaufwand für die Zusatzsteueranwendung reduziert. Der Funktionsumfang des Paketautomaten kann dann durch das Steuergerät besonders aufwandsarm erweitert werden.

Gemäß einem Aspekt kann Integrationsschicht derart ausgebildet sein, dass sie Befehle einer ersten Programmiersprache und/oder einer ersten Syntax in Befehle einer zweiten Programmiersprache und/oder einer zweiten Syntax überführt. Die erste Programmiersprache ist von der zweiten Programmiersprache verschieden. Die erste Syntax ist von der zweiten Syntax verschieden. So wird der Integrationsaufwand weiter reduziert. Beispielsweise kann die Zusatzsteueranwendung auf einem Programmcode einer Programmiersprache beruhen, die von der Programmiersprache der Stationssteuerung abweicht. Das Steuergerät agiert als Übersetzer.

Die Begriffe Programmiersprache und Syntax umfassen auch softwareabhängige Befehlsstrukturen, die so in entsprechende Programmiersprachen überführbar sind, dass sie trotz der Überführung eine korrespondierende Auswirkung verursachen. Beispielsweise kann der Befehl "Schloss öffnen" in einer einzelnen Programmiersprache basierend auf unterschiedlichen Softwareanwendungen mit unterschiedlicher Syntax angegeben werden, die beide dennoch von der Programmiersprache und/oder Syntax der Stationssteuerung abweichen können. Das Steuergerät kann den Befehl derart überführen, dass er hinsichtlich des gewünschten Schlosses des Paketautomaten ausführbar ist und die gewünschte Auswirkung hat. Dazu kann der Befehl in eine mit dem Schloss oder des Paketautomaten kompatible Programmiersprache und/oder Syntax überführt werden.

Bevorzugt kann die Integrationsschicht auch derart ausgebildet sein, dass sie Befehle mehrerer anderer Programmiersprachen/Syntaxe in Befehle einer spezifischen Programmiersprache/Syntaxe übersetzt. Dadurch können beispielsweise mehrere Zustatzsteueranwendungen ermöglicht werden, für deren Interaktion mit dem Paketautomaten das Steuergerät als Gateway dient.

In einigen Ausführungsformen ist die Integrationsschicht derart ausgebildet, dass sie eine Anwendungsprogrammierschnittstelle für externe Anwendungen bereitstellt. Somit kann der Funktionsumfang des Paketautomaten erhöht werden. Die Anwendungen sind dabei nicht auf Interaktionen zwischen dem Paketautomaten und einem Nutzer und/oder einem Zustelldienst beschränkt. Das bedeutet, dass der Funktionsumfang des Paketautomaten auch in vollkommen anderer Hinsicht erweitert werden kann, beispielsweise zu Marketingzwecken oder um angepasste Informationen bereitzustellen.

Optional ist die Integrationsschicht derart ausgebildet, dass sie ein Domain-Namen-System (DNS-Server) für externe Komponenten bereitstellt. Dadurch wird die Interaktion von externen Komponenten und Anwendungen mit dem Paketautomaten vereinfacht, da derartige Komponenten und Anwendungen nur auf die Adresse des Steuergeräts zugreifen müssen und ihnen nur diese bekannt sein müssen. Das Steuergerät wiederum berücksichtigt die Adresse der Stationssteuerung.

Durch den bereitgestellten DNS-Server kann optional auch eine bestehende Integration, wie beispielsweise eine bisherige Kommunikation mit einer Zustelldienstschnittstelle, wie einem Zustelldienst-Server, angepasst werden, um die entsprechende Kommunikation umzuleiten. Die Kommunikation kann dann auf die Integrationsschicht umgeleitet werden, die dann ihrerseits mit der Zustelldienstschnittstelle kommuniziert. Dadurch wird eine effizientere Integration von Zusatzsteueranwendungen in Kombination mit der Zustelldienstschnittstelle ermöglicht, die keine Anpassungen seitens der zu berücksichtigenden Zusatzsteueranwendung erfordert.

Bevorzugt ermöglicht die Zusatzsteueranwendung einen Zugriff auf zumindest ein Schließfach durch den Nutzer und/oder den Zustelldienst oder stellt eine abweichende Zusatzfunktionalität bereit. Dadurch kann der Funktionsumfang des Paketautomaten auch im Hinblick auf seine Schließfächer erweitert werden. Beispielsweise wird so ermöglicht, dass Zustelldienste auf Paketautomaten zugreifen können, deren Automatenbetreiber sie nicht sind. So kann auch die Betriebseffizienz der Paketautomaten erhöht werden, da die Schließfächer für neue Marktteilnehmer zur Verfügung stehen.

In einem Aspekt ist die Schlosssteuerung des Steuergeräts mit zumindest einem Schloss des zumindest einen Schließfachs direkt oder indirekt gekoppelt. Die Schlosssteuerung ist eingerichtet, einen Schließzustand von mit ihr gekoppelten Schlössern direkt oder indirekt zu ermitteln und/oder zu variieren. So können die Schließfächer durch das Steuergerät selbst gesteuert werden, unabhängig von der Stationssteuerung.

Bei der direkten Kopplung ist die Schlosssteuerung unmittelbar mit einem Schloss eines Schließfachs gekoppelt. Bei der indirekten Kopplung ist zumindest eine signaltechnisch zwischen dem Steuergerät und dem Schloss angeordnete Komponente angeordnet, beispielsweise die Stationssteuerung. Das bedeutet, dass die Schlosssteuerung derart mit der Stationssteuerung gekoppelt sein kann, dass dadurch das Ermitteln und/oder Variieren des Schließzustands des Schlosses des Schließfachs ermöglicht wird.

Optional kann die Schlosssteuerung in Software ausgebildet sein.

In einer weiteren Alternative oder als Ergänzung dazu kann die Schlosssteuerung auch über eine Anwendungsprogrammierschnittstelle des Steuergeräts gewährleistet werden. Dann kann die Software beispielsweise sogar entfernt von dem Steuergerät sein und nur kommunikativ über das Steuergerät den Zugriff auf das Schloss ermöglichen.

Bevorzugt können durch das Steuergerät mehrere Schließfächer gemeinsam basierend auf der Zusatzsteueranwendung gesteuert werden.

Die Schließfächer eines Paketautomaten können auch aufgeteilt werden. Beispielsweise können einige Schließfächer ausschließlich durch die Stationssteuerung steuerbar sein, auch hinsichtlich der Schlösser. Dagegen kann eine andere Gruppe von Schließfächern zumindest auch, optional also auch zusätzlich zur Stationssteuerung, durch das Steuergerät steuerbar sein, auch hinsichtlich der Schlösser. Dadurch sind beispielsweise keine Änderungen an der Hardware oder der Steuerung derjenigen Schließfächer notwendig, die weiterhin ausschließlich durch die Stationssteuerung gesteuert werden.

Optional ist das Steuergerät in den Paketautomaten integrierbar und/oder nachrüstbar. So kann das Steuergerät insbesondere in bereits bestehende Paketautomaten integriert werden, so dass deren Funktionsumfang ohne Änderung der Stationssteuerung erweitert werden kann.

In einigen Ausführungsformen kann die Kommunikationsvorrichtung eingerichtet sein, um eine drahtgebundene und/oder drahtlose Kommunikation zu ermöglichen. Insbesondere kann die Kommunikation mittels einem von einem Netzwerkprotokoll, einem Internetprotokoll, einem USB-Protokoll, einem seriellen Schnittstellenprotokoll, einem Mobilfunkprotokoll, einem Bluetooth-Protokoll und einem WLan-Protokoll erfolgen. Dadurch sind verschiedene Kommunikationstopologien möglich, sodass die Interkompatibilität mit externen Komponenten erhöht wird. Beispielsweise können Nutzer sowohl per Mobilfunk als auch per Bluetooth auf das Steuergerät zugreifen, um eine Zusatzsteueranwendung zu nutzen.

Optional ist das Steuergerät eingerichtet, um mit zumindest einem zusätzlichen Steuergerät zu kommunizieren, sodass von zumindest einem der gekoppelten Steuergeräte mehrere Schließfächer gemeinsam steuerbar sind, die jeweils einem einzelnen Steuergerät zugeordnet sind. Das bedeutet, dass einem einzelnen Steuergerät typischerweise eine spezifische Gruppe an Schließfächern zugeordnet ist. Durch die Kommunikation mehrerer Steuergeräte kann diese Gruppe erweitert werden, wobei die Gesamtkollektion gekoppelter Schließfächer durch ein Steuergerät gemeinsam gesteuert werden kann. So können beispielsweise in einem einzelnen Zugriffsprozess eine Vielzahl an Schließfächern geöffnet werden, wenn ein Zustelldienst, der auch nicht Automatenbetreiber ist, mehrere Schließfächer auf einmal mit Sendungen befüllen möchte.

Die Kopplung mehrerer Steuergeräte ist nicht auf einen einzelnen Paketautomaten beschränkt. Es können auch mehrere Steuergeräte im Hinblick auf separate Paketautomaten miteinander kommunizieren, um die Schließfächer gemeinsam steuern zu können. Insgesamt wird durch die Kopplung mehrerer Steuergeräte die Möglichkeit geschaffen, Schließfächer unterschiedlicher Paketautomaten und/oder von unterschiedlichen Automatenbetreibern zu steuern. Die Paketautomaten können dabei auch unterschiedlichen Typs sein.

Die Kopplung mehrerer Steuergeräte ermöglicht auch, dass die Betriebssoftware eines spezifischen Paketautomaten eines Automatenbetreibers anhand der Kopplung zwischen Steuergeräten unterschiedlicher Paketautomaten in entsprechender Weise im Hinblick auf andere Paketautomaten angewendet werden kann. Das wird ermöglicht, obwohl sich beispielsweise die Paketautomaten hinsichtlich der zugrundeliegenden Hardware unterscheiden können. Dies wird insbesondere dadurch ermöglicht, dass die Steuergeräte die Befehle einer entsprechenden Programmiersprache und/oder Syntax in eine für den jeweiligen Paketautomaten angepasste Programmiersprache und/oder Syntax überführen. Dadurch entfällt beispielsweise für Automatenbetreiber das Erfordernis, ihre Steuerprogramme für Stationssteuerungen von Paketautomaten unterschiedlichen Typs anzupassen.

In einem Aspekt kann das Steuergerät eingerichtet sein, um Hardware- und/oder Softwarekomponenten des Steuergeräts und/oder der Stationssteuerung basierend auf einem Effizienzkriterium zum Ausführen einer Stations-Steueranwendung und/oder Zusatzsteueranwendung zu steuern, abhängig von der, von einem Nutzer und/oder Zustelldienst, aufgerufenen Stations-Steueranwendung und/oder Zusatzsteueranwendung. Das Steuergerät erfasst also die vom Nutzer und/oder vom Zustelldienst aufgerufene Steueranwendung und/oder Zusatzsteueranwendung. Das Steuergerät wählt dann diejenigen Hardware- und/oder Softwarekomponenten des Paketautomaten oder von damit gekoppelten Steuergeräten aus, durch die aufgerufene Funktion bestmöglich und insbesondere am effizientesten ermöglicht ist. Beispielsweise kann das Steuergerät einen spezifischen Kommunikationsweg auswählen, beispielsweise Bluetooth, der die höchste Effizienz zum Gewährleisten der Stations-Steueranwendung und/oder Zusatzsteueranwendung verspricht.

In einigen Ausführungsformen kann der Paketautomat einen Sensor, insbesondere einen Barcodescanner, aufweisen. Das Steuergerät kann derart eingerichtet sein, dass ein Zugriff der Zusatzsteueranwendung auf den Sensor ermöglicht wird. Dadurch wird der Zugriff für die Zusatzsteueranwendung auf weitere Komponenten des Paketautomaten ermöglicht.

In einer Alternative kann es sich auch um einen anderen Sensor handeln, beispielsweise einen Temperatursensor, Feuchtigkeitssensor, Luftdrucksensor, eine Kamera, einen Infrarotsensor oder andere.

Gemäß einem weiteren Aspekt wird die Aufgabe erfindungsgemäß auch gelöst durch ein System umfassend zumindest einen Paketautomaten und ein damit gekoppeltes Steuergerät wie hierin zuvor beschrieben. Die Vorteile, die durch das hierin beschriebene Steuergerät erreicht werden, werden in entsprechender Weise auch durch das System erzielt.

Gemäß einem zusätzlichen Aspekt wird die Aufgabe erfindungsgemäß auch gelöst durch ein Verfahren zum Betreiben eines Paketautomaten. Der Paketautomat weist eine Stationssteuerung und zumindest ein Schließfach zur Aufbewahrung einer zuzustellenden Sendung auf. Die Stationssteuerung ist in den Paketautomaten integriert und weist eine Stations-Steueranwendung für eine Interaktion zwischen der Stationssteuerung und einem Nutzer und/oder einem Zustelldienst auf, sodass ein Zugriff auf zumindest ein Schließfach durch den Nutzer und/oder den Zustelldienst basierend auf der Stations-Steueranwendung ermöglicht wird. Das Verfahren weist zumindest die Schritte auf:
- Koppeln eines Steuergeräts mit dem Paketautomaten, bevorzugt eines Steuergeräts wie hierin zuvor beschrieben. Das Steuergerät weist zumindest eine Datenverarbeitungsvorrichtung, eine Kommunikationsvorrichtung und eine Schlosssteuerung auf.
- Ausführen einer Zusatzsteueranwendung für eine Interaktion zwischen dem Paketautomat und einem Nutzer und/oder einem Zustelldienst basierend auf dem Steuergerät. Die Zusatzsteueranwendung weicht von der Stations-Steueranwendung ab.

Die Vorteile, die durch das hierin beschriebene Steuergerät erreicht werden, werden in entsprechender Weise auch durch das Verfahren erzielt. Insbesondere werden die Kompatibilität des Paketautomaten, sein Funktionsumfang und seine Betriebseffizienz erhöht.

Optional wird eine Interaktion zwischen dem Paketautomat und einem Nutzer und/oder einem Zustelldienst basierend auf der Zusatzsteueranwendung anhand einer Integrationsschicht des Steuergeräts ermöglicht.

Optional wird die Interaktion anhand der Integrationsschicht programmiersprachenunabhängig ermöglicht.

Optional überführt die Integrationsschicht Befehle einer ersten Programmiersprache und/oder einer ersten Syntax in Befehle einer zweiten Programmiersprache und/oder einer zweiten Syntax. Die erste Programmiersprache ist von der zweiten Programmiersprache verschieden. Die erste Syntax ist von der zweiten Syntax verschieden.

Optional wird durch die Zusatzsteueranwendung ein Zugriff auf zumindest ein Schließfach durch den Nutzer und/oder den Zustelldienst ermöglicht oder eine abweichende Zusatzfunktionalität bereitgestellt.

Optional ist die Schlosssteuerung des Steuergeräts mit zumindest einem Schloss des zumindest einen Schließfachs direkt oder indirekt gekoppelt. Das Verfahren weist zusätzlich den Schritt auf:
- Ermitteln oder Variieren zumindest eines Schließzustands eines mit der Schlosssteuerung direkt oder indirekt gekoppelten Schlosses.

Optional kommuniziert das Steuergerät mit zumindest einer externen Komponente basierend auf der Kommunikationsvorrichtung drahtlos und/oder drahtgebunden. Insbesondere erfolgt die Kommunikation mittels einem von einem Netzwerkprotokoll, einem Internetprotokoll, einem USB-Protokoll, einem seriellen Schnittstellenprotokoll, einem Mobilfunkprotokoll, einem Bluetooth-Protokoll und einem WLan-Protokoll.

Optional kommuniziert das Steuergerät mit zumindest einem weiteren Steuergerät, sodass von zumindest einem der gekoppelten Steuergeräte mehrere Schließfächer gemeinsam gesteuert werden, die jeweils einem einzelnen Steuergerät zugeordnet sind.

Optional steuert das Steuergerät Hardware- und/oder Softwarekomponenten des Steuergeräts und/oder der Stationssteuerung basierend auf einem Effizienzkriterium zum Ausführen einer Stations-Steueranwendung und/oder Zusatzsteueranwendung, abhängig von der, von einem Nutzer und/oder Zustelldienst, aufgerufenen Stations-Steueranwendung und/oder Zusatzsteueranwendung.

Optional weist der Paketautomat einen Sensor (Barcodescanner) auf. Das Steuergerät ermöglicht einen Zugriff der Zusatzsteueranwendung auf den Sensor.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Fig. 1 eine schematische Darstellung eines erfindungsgemäßen Systems, und
Fig. 2 eine schematische Darstellung eines erfindungsgemäßen Verfahrens zum Betreiben eines Paketautomaten.

Alle nachstehend in Bezug auf die Ausführungsbeispiele und/oder die begleitenden Figuren genannten Merkmale können allein oder in einer beliebigen Unterkombination mit Merkmalen der Erfindung, einschließlich Merkmalen bevorzugter Ausführungsformen, kombiniert werden.

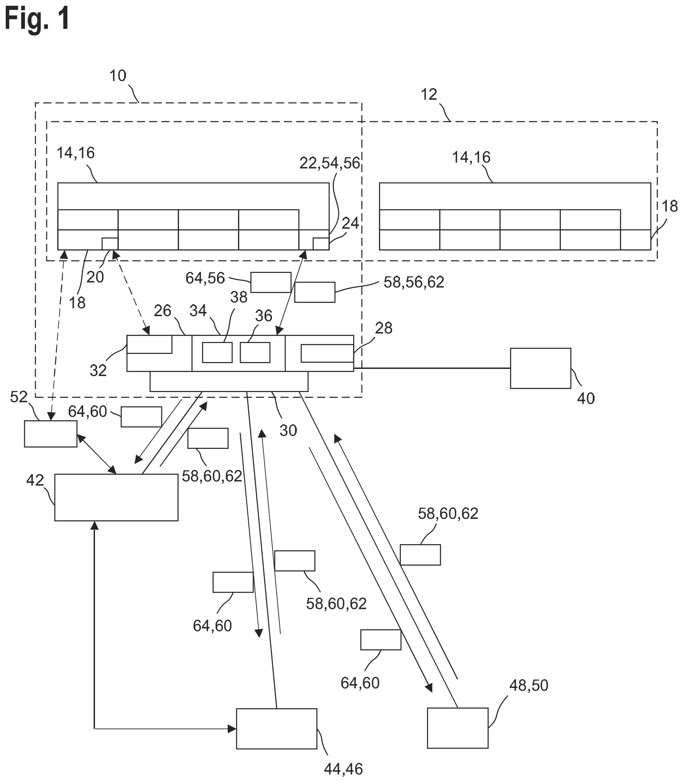

Figur 1 zeigt System 10 umfassend zumindest einen Paketautomaten 14 und ein damit gekoppeltes Steuergerät 26.

Bei Steuergerät 26 handelt es sich um ein Steuergerät für einen Paketautomaten 14, wobei der Paketautomat 14 eine Stationssteuerung 22 und zumindest ein Schließfach 18 zur Aufbewahrung einer zuzustellenden Sendung 52 aufweist, wobei die Stationssteuerung 22 in den Paketautomaten 14 integriert ist und eine Stations-Steueranwendung 54 für eine Interaktion zwischen der Stationssteuerung 22 und einem Nutzer 46 und/oder einem Zustelldienst 50 aufweist, sodass ein Zugriff auf zumindest ein Schließfach 18 durch den Nutzer 46 und/oder den Zustelldienst 50 basierend auf der Stations-Steueranwendung 54 ermöglicht wird.

Das Steuergerät 26 weist zumindest eine Datenverarbeitungsvorrichtung 28, eine Kommunikationsvorrichtung 30 und eine Schlosssteuerung 32 auf. Das Steuergerät 26 ist derart mit der Stationssteuerung 22 koppelbar ist, dass eine Zusatzsteueranwendung 62 für eine Interaktion zwischen dem Paketautomat 14 und einem Nutzer 46 und/oder einem Zustelldienst 50 bereitgestellt wird, wobei die Zusatzsteueranwendung 62 von der Stations-Steueranwendung 54 abweicht.

Das Steuergerät 26 weist eine zusätzliche, von der Stationssteuerung 22 verschiedene Integrationsschicht 34 für zumindest eine Zusatzsteueranwendung 62 auf.

Die Integrationsschicht 34 ist derart ausgebildet, dass eine Interaktion zwischen dem Paketautomat 14 und einem Nutzer 46 und/oder einem Zustelldienst 50 basierend auf der Zusatzsteueranwendung 62 programmiersprachenunabhängig ermöglicht wird.

Die Integrationsschicht 34 ist derart ausgebildet, dass sie Befehle 58 einer ersten Programmiersprache 56 und/oder einer ersten Syntax in Befehle einer zweiten Programmiersprache 60 und/oder einer zweiten Syntax überführt, wobei die erste Programmiersprache 56 von der zweiten Programmiersprache 60 verschieden ist, wobei die erste Syntax von der zweiten Syntax verschieden ist.

Die Integrationsschicht 34 ist derart ausgebildet, dass sie eine Anwendungsprogrammierschnittstelle 38 für externe Anwendungen bereitstellt.

Die Integrationsschicht 34 ist derart ausgebildet, dass sie ein Domain-Namen-System 36 für externe Komponenten bereitstellt.

Die Zusatzsteueranwendung 62 ermöglicht einen Zugriff auf zumindest ein Schließfach 18 durch den Nutzer 46 und/oder den Zustelldienst 50 oder stellt eine abweichende Zusatzfunktionalität bereitstellt.

Die Schlosssteuerung 32 des Steuergeräts 26 ist direkt oder indirekt mit zumindest einem Schloss 20 des zumindest einen Schließfachs 18 gekoppelt. Die Schlosssteuerung 32 ist eingerichtet, einen Schließzustand von mit ihr direkt oder indirekt gekoppelten Schlössern 20 zu ermitteln und/oder zu variieren.

Das Steuergerät 26 ist in den Paketautomaten 14 integrierbar und/oder nachrüstbar.

Die Kommunikationsvorrichtung 30 ist eingerichtet, um eine drahtgebundene und/oder drahtlose Kommunikation zu ermöglichen.

Das Steuergerät 26 ist eingerichtet, um mit zumindest einem zusätzlichen Steuergerät 26 zu kommunizieren, sodass von zumindest einem der gekoppelten Steuergeräte 26 mehrere Schließfächer 18 gemeinsam steuerbar sind, die jeweils einem einzelnen Steuergerät 26 zugeordnet sind.

Das Steuergerät 26 ist eingerichtet, um Hardware- und/oder Softwarekomponenten des Steuergeräts 26 und/oder der Stationssteuerung 22 basierend auf einem Effizienzkriterium zum Ausführen einer Stations-Steueranwendung 54 und/oder Zusatzsteueranwendung 62 zu steuern, abhängig von der, von einem Nutzer 46 und/oder Zustelldienst 50, aufgerufenen Stations-Steueranwendung 54 und/oder Zusatzsteueranwendung 62.

Der Paketautomat 14 weist einen Sensor 24 auf. Das Steuergerät 26 ist derart eingerichtet, dass ein Zugriff der Zusatzsteueranwendung 62 auf den Sensor 24 ermöglicht wird.

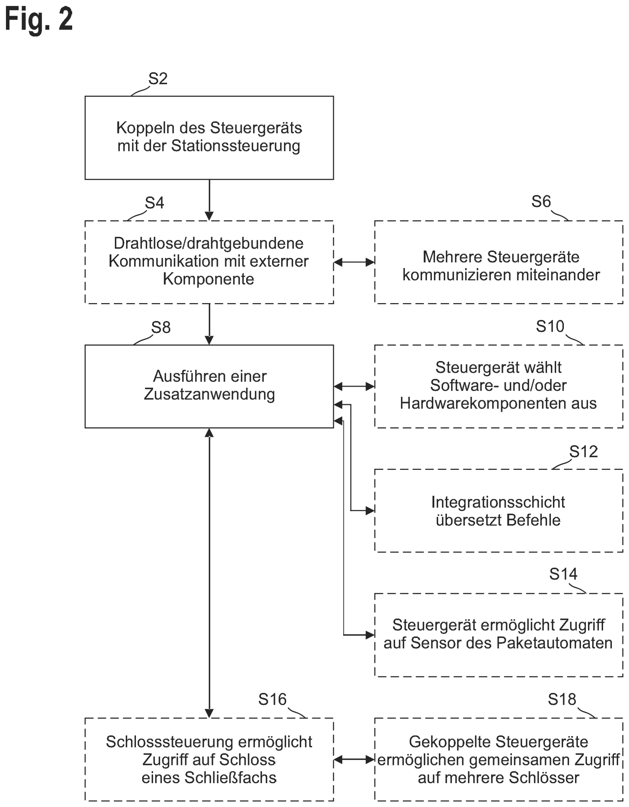

Figur 2 zeigt ein Verfahren zum Betreiben eines Paketautomaten 14, wobei der Paketautomat 14 eine Stationssteuerung 22 und zumindest ein Schließfach 18 zur Aufbewahrung einer zuzustellenden Sendung 52 aufweist, wobei die Stationssteuerung 22 in den Paketautomaten 14 integriert ist und eine Stations-Steueranwendung 54 für eine Interaktion zwischen der Stationssteuerung 22 und einem Nutzer 46 und/oder einem Zustelldienst 50 aufweist, sodass ein Zugriff auf zumindest ein Schließfach 18 durch den Nutzer 46 und/oder den Zustelldienst 50 basierend auf der Stations-Steueranwendung 54 ermöglicht wird.

Das Verfahren weist zumindest den Schritt auf:
- Koppeln eines Steuergeräts 26 mit dem Paketautomaten 14, wobei das Steuergerät 26 zumindest eine Datenverarbeitungsvorrichtung 28, eine Kommunikationsvorrichtung 30 und eine Schlosssteuerung 32 aufweist, und
- Ausführen einer Zusatzsteueranwendung 62 für eine Interaktion zwischen dem Paketautomat 14 und einem Nutzer 46 und/oder einem Zustelldienst 50 basierend auf dem Steuergerät 26, wobei die Zusatzsteueranwendung 62 von der Stations-Steueranwendung 54 abweicht.

Eine Interaktion zwischen dem Paketautomat 14 und einem Nutzer 46 und/oder einem Zustelldienst 50 wird basierend auf der Zusatzsteueranwendung 62 anhand einer Integrationsschicht 34 des Steuergeräts 26 ermöglicht.

Die Interaktion wird anhand der Integrationsschicht 34 programmiersprachenunabhängig ermöglicht.

Die Integrationsschicht 34 überführt Befehle 58 einer ersten Programmiersprache 56 in Befehle 58 einer zweiten Programmiersprache 60, wobei die erste Programmiersprache 56 von der zweiten Programmiersprache 60 verschieden ist.

Durch die Zusatzsteueranwendung 62 wird ein Zugriff auf zumindest ein Schließfach 18 durch den Nutzer 46 und/oder den Zustelldienst 50 ermöglicht oder dadurch wird eine abweichende Zusatzfunktionalität bereitgestellt.

Die Schlosssteuerung 32 des Steuergeräts 26 ist direkt oder indirekt mit zumindest einem Schloss 20 des zumindest einen Schließfachs 18 gekoppelt.

Das Verfahren weist zusätzlich auf: Ermitteln oder Variieren zumindest eines Schließzustands eines mit der Schlosssteuerung 32 direkt oder indirekt gekoppelten Schlosses 20.

Das Steuergerät 26 kommuniziert mit zumindest einer externen Komponente basierend auf der Kommunikationsvorrichtung (30) drahtlos und/oder drahtgebunden kommuniziert.

Das Steuergerät 26 kommuniziert mit zumindest einem weiteren Steuergerät 26, sodass von zumindest einem der gekoppelten Steuergeräte 26 mehrere Schließfächer 18 gemeinsam gesteuert werden, die jeweils einem einzelnen Steuergerät 26 zugeordnet sind.

Das Steuergerät 26 steuert Hardware- und/oder Softwarekomponenten des Steuergeräts 26 und/oder der Stationssteuerung 22 basierend auf einem Effizienzkriterium zum Ausführen einer Stations-Steueranwendung 54 und/oder Zusatzsteueranwendung 62, abhängig von der, von einem Nutzer 46 und/oder Zustelldienst 50, aufgerufenen Stations-Steueranwendung 54 und/oder Zusatzsteueranwendung 62.

Der Paketautomat 14 weist einen Sensor 24 auf. Das Steuergerät 26 ermöglicht einen Zugriff der Zusatzsteueranwendung 62 auf den Sensor 24.

### Bezugszeichen:

- 10: System
- 12: Verbund
- 14: Paketautomat
- 16: Automatenbetreiber
- 18: Schließfach
- 20: Schloss
- 22: Stationssteuerung
- 24: Sensor
- 26: Steuergerät
- 28: Datenverarbeitungsvorrichtung
- 30: Kommunikationsvorrichtung
- 32: Schlosssteuerung
- 34: Integrationsschicht
- 36: Domain-Namen-System
- 38: Anwendungsprogrammierschnittstelle
- 40: Datenspeicher
- 42: Server
- 44: Nutzerschnittstelle
- 46: Nutzer
- 48: Zustelldienstschnittstelle
- 50: Zustelldienst
- 52: Sendung
- 54: Stations-Steueranwendung
- 56: erste Programmiersprache/erste Syntax
- 58: Befehle
- 60: zweite Programmiersprache/zweite Syntax
- 62: Zusatzsteueranwendung
- 64: Rückmeldung

## Patentansprüche

1. Steuergerät (26) für einen Paketautomaten (14), wobei der Paketautomat (14) eine Stationssteuerung (22) und zumindest ein Schließfach (18) zur Aufbewahrung einer zuzustellenden Sendung (52) aufweist, wobei die Stationssteuerung (22) in den Paketautomaten (14) integriert ist und eine Stations-Steueranwendung (54) für eine Interaktion zwischen der Stationssteuerung (22) und einem Nutzer (46) und/oder einem Zustelldienst (50) aufweist, sodass ein Zugriff auf zumindest ein Schließfach (18) durch den Nutzer (46) und/oder den Zustelldienst (50) basierend auf der Stations-Steueranwendung (54) ermöglicht wird,
wobei das Steuergerät (26) zumindest eine Datenverarbeitungsvorrichtung (28), eine Kommunikationsvorrichtung (30) und eine Schlosssteuerung (32) aufweist, und wobei das Steuergerät (26) derart mit der Stationssteuerung (22) koppelbar ist, dass:
- eine Zusatzsteueranwendung (62) für eine Interaktion zwischen dem Paketautomat (14) und einem Nutzer (46) und/oder einem Zustelldienst (50) bereitgestellt wird, wobei die Zusatzsteueranwendung (62) von der Stations-Steueranwendung (54) abweicht.

2. Steuergerät (26) nach Anspruch 1, **dadurch gekennzeichnet, dass** das Steuergerät (26) eine zusätzliche, von der Stationssteuerung (22) verschiedene Integrationsschicht (34) für zumindest eine Zusatzsteueranwendung (62) aufweist.

3. Steuergerät (26) nach Anspruch 2, **dadurch gekennzeichnet, dass** die Integrationsschicht (34) derart ausgebildet ist, dass eine Interaktion zwischen dem Paketautomat (14) und einem Nutzer (46) und/oder einem Zustelldienst (50) basierend auf der Zusatzsteueranwendung (62) programmiersprachenunabhängig ermöglicht wird.

4. Steuergerät (26) nach Anspruch 2 oder 3, **dadurch gekennzeichnet, dass** die Integrationsschicht (34) derart ausgebildet ist, dass sie Befehle (58) einer ersten Programmiersprache (56) und/oder einer ersten Syntax in Befehle einer zweiten Programmiersprache (60) und/oder einer zweiten Syntax überführt, wobei die erste Programmiersprache (56) von der zweiten Programmiersprache (60) verschieden ist, wobei die erste Syntax von der zweiten Syntax verschieden ist.

5. Steuergerät (26) nach einem der Ansprüche 2 bis 4, **dadurch gekennzeichnet, dass** die Integrationsschicht (34) derart ausgebildet ist, dass sie eine Anwendungsprogrammierschnittstelle (38) für externe Anwendungen bereitstellt.

6. Steuergerät (26) nach einem der Ansprüche 2 bis 5, **dadurch gekennzeichnet, dass** die Integrationsschicht (34) derart ausgebildet ist, dass sie ein Domain-Namen-System (36) für externe Komponenten bereitstellt.

7. Steuergerät (26) nach einem der vorherigen Ansprüche, **dadurch gekennzeichnet, dass** die Zusatzsteueranwendung (62) einen Zugriff auf zumindest ein Schließfach (18) durch den Nutzer (46) und/oder den Zustelldienst (50) ermöglicht oder eine abweichende Zusatzfunktionalität bereitstellt.

8. Steuergerät (26) nach einem der vorherigen Ansprüche, **dadurch gekennzeichnet, dass** die Schlosssteuerung (32) des Steuergeräts (26) direkt oder indirekt mit zumindest einem Schloss (20) des zumindest einen Schließfachs (18) gekoppelt ist, und wobei die Schlosssteuerung (32) eingerichtet ist, einen Schließzustand von mit ihr direkt oder indirekt gekoppelten Schlössern (20) zu ermitteln und/oder zu variieren.

9. Steuergerät (26) nach einem der vorherigen Ansprüche, **dadurch gekennzeichnet, dass** es in den Paketautomaten (14) integrierbar und/oder nachrüstbar ist.

10. Steuergerät (26) nach einem der vorherigen Ansprüche, **dadurch gekennzeichnet, dass** die Kommunikationsvorrichtung (30) eingerichtet ist, um eine drahtgebundene und/oder drahtlose Kommunikation zu ermöglichen.

11. Steuergerät (26) nach einem der vorherigen Ansprüche, **dadurch gekennzeichnet, dass** das Steuergerät (26) eingerichtet ist, um mit zumindest einem zusätzlichen Steuergerät (26) zu kommunizieren, sodass von zumindest einem der gekoppelten Steuergeräte (26) mehrere Schließfächer (18) gemeinsam steuerbar sind, die jeweils einem einzelnen Steuergerät (26) zugeordnet sind.

12. Steuergerät (26) nach einem der vorherigen Ansprüche, **dadurch gekennzeichnet, dass** das Steuergerät (26) eingerichtet ist, um Hardware- und/oder Softwarekomponenten des Steuergeräts (26) und/oder der Stationssteuerung (22) basierend auf einem Effizienzkriterium zum Ausführen einer Stations-Steueranwendung (54) und/oder Zusatzsteueranwendung (62) zu steuern, abhängig von der, von einem Nutzer (46) und/oder Zustelldienst (50), aufgerufenen Stations-Steueranwendung (54) und/oder Zusatzsteueranwendung (62).

13. Steuergerät (26) nach einem der vorherigen Ansprüche, **dadurch gekennzeichnet, dass** der Paketautomat (14) einen Sensor (24) aufweist, und dass das Steuergerät (26) derart eingerichtet ist, dass ein Zugriff der Zusatzsteueranwendung (62) auf den Sensor (24) ermöglicht wird.

14. System (10) umfassend zumindest einen Paketautomaten (14) und ein damit gekoppeltes Steuergerät (26) nach einem der vorherigen Ansprüche.

15. Verfahren zum Betreiben eines Paketautomaten (14), wobei der Paketautomat (14) eine Stationssteuerung (22) und zumindest ein Schließfach (18) zur Aufbewahrung einer zuzustellenden Sendung (52) aufweist, wobei die Stationssteuerung (22) in den Paketautomaten (14) integriert ist und eine Stations-Steueranwendung (54) für eine Interaktion zwischen der Stationssteuerung (22) und einem Nutzer (46) und/oder einem Zustelldienst (50) aufweist, sodass ein Zugriff auf zumindest ein Schließfach (18) durch den Nutzer (46) und/oder den Zustelldienst (50) basierend auf der Stations-Steueranwendung (54) ermöglicht wird,
und wobei das Verfahren zumindest den Schritt aufweist:
- Koppeln eines Steuergeräts (26) mit dem Paketautomaten (14), wobei das Steuergerät (26) zumindest eine Datenverarbeitungsvorrichtung (28), eine Kommunikationsvorrichtung (30) und eine Schlosssteuerung (32) aufweist, und
- Ausführen einer Zusatzsteueranwendung (62) für eine Interaktion zwischen dem Paketautomat (14) und einem Nutzer (46) und/oder einem Zustelldienst (50) basierend auf dem Steuergerät (26), wobei die Zusatzsteueranwendung (62) von der Stations-Steueranwendung (54) abweicht.

16. Verfahren nach Anspruch 15, **dadurch gekennzeichnet, dass** eine Interaktion zwischen dem Paketautomat (14) und einem Nutzer (46) und/oder einem Zustelldienst (50) basierend auf der Zusatzsteueranwendung (62) anhand einer Integrationsschicht (34) des Steuergeräts (26) ermöglicht wird.

17. Verfahren nach Anspruch 16, **dadurch gekennzeichnet, dass** die Interaktion anhand der Integrationsschicht (34) programmiersprachenunabhängig ermöglicht wird.

18. Verfahren nach Anspruch 16 oder 17, **dadurch gekennzeichnet, dass** die Integrationsschicht (34) Befehle (58) einer ersten Programmiersprache (56) in Befehle (58) einer zweiten Programmiersprache (60) überführt, wobei die erste Programmiersprache (56) von der zweiten Programmiersprache (60) verschieden ist.

19. Verfahren nach einem der Ansprüche 15 bis 18, **dadurch gekennzeichnet, dass** durch die Zusatzsteueranwendung (62) ein Zugriff auf zumindest ein Schließfach (18) durch den Nutzer (46) und/oder den Zustelldienst (50) ermöglicht oder eine abweichende Zusatzfunktionalität bereitgestellt wird.

20. Verfahren nach einem der Ansprüche 15 bis 19, **dadurch gekennzeichnet, dass** die Schlosssteuerung (32) des Steuergeräts (26) direkt oder indirekt mit zumindest einem Schloss (20) des zumindest einen Schließfachs (18) gekoppelt ist, und wobei das Verfahren zusätzlich aufweist:
- Ermitteln oder Variieren zumindest eines Schließzustands eines mit der Schlosssteuerung (32) direkt oder indirekt gekoppelten Schlosses (20).

21. Verfahren nach einem der Ansprüche 15 bis 20, **dadurch gekennzeichnet, dass** das Steuergerät (26) mit zumindest einer externen Komponente basierend auf der Kommunikationsvorrichtung (30) drahtlos und/oder drahtgebunden kommuniziert.

22. Verfahren nach einem der Ansprüche 15 bis 21, **dadurch gekennzeichnet, dass** das Steuergerät (26) mit zumindest einem weiteren Steuergerät (26) kommuniziert, sodass von zumindest einem der gekoppelten Steuergeräte (26) mehrere Schließfächer (18) gemeinsam gesteuert werden, die jeweils einem einzelnen Steuergerät (26) zugeordnet sind.

23. Verfahren nach einem der Ansprüche 15 bis 22, **dadurch gekennzeichnet, dass** das Steuergerät (26) Hardware- und/oder Softwarekomponenten des Steuergeräts (26) und/oder der Stationssteuerung (22) basierend auf einem Effizienzkriterium zum Ausführen einer Stations-Steueranwendung (54) und/oder Zusatzsteueranwendung (62) steuert, abhängig von der, von einem Nutzer (46) und/oder Zustelldienst (50), aufgerufenen Stations-Steueranwendung (54) und/oder Zusatzsteueranwendung (62).

24. Verfahren nach einem der Ansprüche 15 bis 23, **dadurch gekennzeichnet, dass** der Paketautomat (14) einen Sensor (24) aufweist, und dass das Steuergerät (26) einen Zugriff der Zusatzsteueranwendung (62) auf den Sensor (24) ermöglicht.
